(19) Europäisches Patentamt
European Patent Office
Office européen des brevets

(11) Veröffentlichungsnummer: **0 508 054 A2**

(12) **EUROPÄISCHE PATENTANMELDUNG**

(21) Anmeldenummer: **92101847.9**

(51) Int. Cl.$^5$: **C08G 69/02**, C08G 69/34

(22) Anmeldetag: **05.02.92**

(30) Priorität: **10.04.91 DE 4111670**

(43) Veröffentlichungstag der Anmeldung:
**14.10.92 Patentblatt 92/42**

(84) Benannte Vertragsstaaten:
**CH DE DK ES FR GB IT LI NL SE**

(71) Anmelder: **SCHERING AKTIENGESELLSCHAFT**
**Berlin und Bergkamen**
**Ernst-Schering-Strasse 14 Postfach 15 40**
**W-4709 Bergkamen(DE)**

(72) Erfinder: **Drawert, Manfred, Dr. Dipl.-Chem.**
**Alte Kreisstrasse 13**
**W-5758 Fröndenberg(DE)**
Erfinder: **Krase, Horst**
**Unterster Kamp 14**
**W-4700 Hamm 1(DE)**

(54) **Polyamidharze und deren Verwendung für den Reliefdruck.**

(57) Die Erfindung betrifft Polyamide auf Basis von Mischungen von Säuren, Aminen, Aminocarbonsäuren und deren Verwendung insbesondere zur Herstellung von vergilbungsbeständigen Reliefdrucken.

EP 0 508 054 A2

Die Erfindung betrifft Polyamide auf Basis von Mischungen von Säuren, Aminen, Aminocarbonsäuren und deren Verwendung insbesondere zur Herstellung von vergilbungsbeständigen Reliefdrucken, welche außerdem eine gute Haftung auf verschiedenen Substraten aufweisen.

Die Reliefdekoration von organischen und anorganischen Substraten ist seit längerem bekannt.

Die ursprüngliche Technik, reliefartige Drucke auf Papier oder Karton für z. B. Buchdecken, Werbeartikel, Postkarten, Visitenkarten, Packungen u. a. aufzubringen, bestand darin, die erhabene oder vertiefte Prägung mit gravierten Platten bzw. mit Drucktypen auf Druckmaschinen mit oder ohne Farbübertragung auszuführen. Dabei wird das Druckbild in einem oder mehreren Arbeitsgängen ein- oder mehrfarbig vorgedruckt und dann hochgeprägt.

In neuerer Zeit setzt sich eine Abwandlung dieses Verfahrens immer mehr durch. Hierbei werden die Substrate zwar auch noch mit einem Druckbild versehen, jedoch entfällt die Prägephase. Die Erzeugung des Reliefs erfolgt durch Beschichtung des Drucks mit einem thermoplastischen Kunstharz.

Technisch läuft das Verfahren so, daß das Substrat im Offsetdruckverfahren mit den hierfür üblichen Druckfarben bedruckt wird. Sofort danach wird auf die noch feuchte und klebrige Oberfläche des Drucks ein fein pulverisiertes thermoplastisches Kunstharz gestreut. Der Überschuß wird von den nicht bedruckten und damit nicht klebenden Stellen wieder abgesaugt. Bei der sich daran anschließenden Wärmebehandlung wird das Harz bis auf Temperaturen oberhalb seines Schmelzpunktes erhitzt.

An die thermoplastischen Kunstharze werden dabei eine Reihe von Forderungen gestellt, von denen die wichtigsten darin bestehen, daß das Harz keine oder eine möglichst geringe Eigenfärbung aufweist und sich zu einem feinen Pulver vermahlen läßt, welches auch unter Anwendungsbedingungen nicht blockt und somit rieselfähig bleibt.

Die bisher für diesen Zweck verwendeten Polyamidharze auf Basis von dimerisierten Fettsäuren und Ethylendiamin erfüllen eine Reihe dieser Forderungen, sind aber, hinsichtlich der Farbzahl und Verfärbungsbeständigkeit, der Haftung an insbesondere Metall und Glas, noch verbesserungsbedürftig. Außerdem sind zu ihrer Herstellung hydrierte Fettsäuren mit Jodzahlen $< 10$ erforderlich und bei der Kondensation führen bereits kleine Mengen von Luftsauerstoff zu einer merklichen Verschlecherung der Farbzahl.

Aufgabe der vorliegenden Erfindung war es daher, einmal diese Nachteile des Standes der Technik zu überwinden, und im Gegensatz zu den bisher üblichen Harzen, welche eine glatte, glänzende Oberfläche liefern, Harze zu finden, welche dem Reliefdruck eine effektvolle, matte Oberfläche mit körniger Struktur verleihen und zusätzlich eine kratzfeste Oberfläche aufweisen.

Eine ausreichende Haftung an den verschiedenen Substraten, insbesondere Papier, Karton, Metall und Glas, eine gute Flexibilität, Verträglichkeit mit der Untergrundfarbe und klebfreie Oberflächen werden ebenfalls vorausgesetzt.

Aus der DE-OS-35 10 415 sind Polyamide auf Basis hydrierter dimerisierter Fettsäuren, gegebenenfalls einer Co-Dicarbonsäure, einer besonders abgestimmten Kombination von geradkettigen und verzweigten kurzkettigen Monocarbonsäuren und einer Aminmischung aus Ethylendiamin und Hexamethylendiamin bekannt. Diese Produkte zeigen zwar hinsichtlich Oberflächenbeschaffenheit, Farbzahl und Verfärbungsbeständigkeit eine Verbesserung, zu ihrer Herstellung müssen aber immer noch die dimerisierten Fettsäuren so weit hydriert werden, daß die Jodzahlen im Bereich von $\leqq 25$ liegen. Reliefdrucke aus diesen Harzen weisen eine glatte, glänzende Oberfläche auf.

Gegenstand der vorliegenden Erfindung sind Polyamide, herstellbar durch Kondensation von

A1) mindestens einer aliphatischen Dicarbonsäure der allgemeinen Formel

$HOOC-(CH_2)_n-COOH$

mit $n = 4 - 11$ und

A2) mindestens einer der Säuren der allgemeinen Formel

HOOC-R-COOH

worin der Rest R

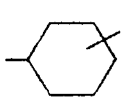 , 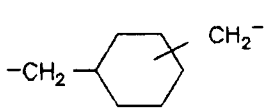 , 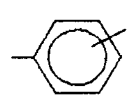 , 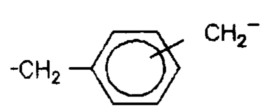

sein kann und worin das Verhältnis von A1 : A2 im Bereich von 1 : 0,1 bis 1 : 2 Mol liegt und

A3) einer gesättigten Monocarbonsäure in Mengen von bis zu 0,1 Mol, bezogen auf Carbonsäuremenge gemäß A1 und

B) mindestens eines der Diamine aus der Gruppe 1,6-Diaminohexan, 1,5-Diamino-2-methyl-pentan, 2,4,4 (4,4,2)-Trimethyl-1,6-diaminohexan, 1,9-Diaminonan und 1,12-Diaminododecan, worin das Verhältnis der Komponenten A1) + A2) zu B im wesentlichen - bezogen auf Amino- und Säuregruppen - equivalent ist und

C) mindestens einer Aminocarbonsäure der allgemeinen Formel

$H_2N\text{-}(CH_2)_n\text{-}COOH$

mit n = 5 - 11

oder deren Laktame,

wobei pro Mol Carboxylgruppen der unter A genannten Säuren, 0,5 - 1,5 Mol Aminocarbonsäure bzw. Laktam eingesetzt werden nach an sich bekannten Verfahren bei Temperaturen zwischen 200 - 280 °C, gegebenenfalls unter Mitverwendung üblicher Amidierungskatalysatoren, wobei am Ende der Reaktion ein Unterdruck von kleiner 100 mbar angelegt wird.

Ein weiterer Gegenstand der Erfindung ist dadurch gekennzeichnet, daß als Komponente A1) 1,0 Mol Sebazinsäure und A2) 0,3 bis 0,8 Mol Isophthalsäure verwendet werden, wobei gegebenenfalls bis < 0,05 Mol der Isophthalsäure durch dimerisierte Fettsäure ersetzt werden kann, und B) 1,3 - 1,8 Mol 1,6-Diaminohexan und C) 2,6 - 3,6 Mol Caprolaktam eingesetzt werden.

Ein weiterer Gegenstand der vorliegenden Erfindung ist ein Verfahren zur Herstellung von Polyamiden durch Polykondensation von

A1) mindestens einer aliphatischen Dicarbonsäure der allgemeinen Formel

$HOOC\text{-}(CH_2)_n\text{-}COOH$

mit n = 4 - 11 und gegebenenfalls

A2) mindestens einer der Säuren der allgemeinen Formel

HOOC-R-COOH

worin der Rest R

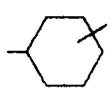 , 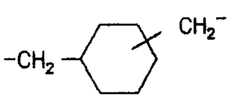 , 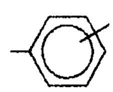 , 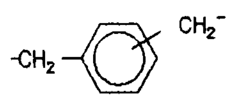 , -DFS-

sein kann, und worin -DFS- der Rest der dimerisierten Fettsäure bedeutet, und worin das Verhältnis von A1 : A2 im Bereich von 1 : 0,05 bis 1 : 2,0 Mol, vorzugsweise 1 : 0,5 Mol, sein kann, und

A3) einer gesättigten Monocarbonsäure in Mengen von bis zu 0,1 Mol, bezogen auf Carbonsäuremenge gemäß A1 und

B) mindestens eines der Diamine aus der Gruppe 1,6-Diaminohexan, 1,5-Diamino-2-methyl-pentan, 2,4,4 (4,4,2)-Trimethyl-1,6-diaminohexan, 1,9-Diaminononan und 1,12-Diaminododecan, worin das Verhältnis der Komponenten A1) + A2) zu B im wesentlichen - bezogen auf Amino- und Säuregruppen - equivalent ist und

C) mindestens eine Aminocarbonsäure der allgemeinen Formel

$H_2N\text{-}(CH_2)_n\text{-}COOH$

mit n = 5 - 11

oder deren Laktame

wobei pro Mol Carboxylgruppen der unter A genannten Säuren 0,5 - 1,5 Mol Amonocarbonsäure bzw. Laktam eingesetzt werden, nach an sich bekannten Verfahren bei Temperaturen zwischen 200 - 280 °C, gegebenenfalls unter Mitverwendung üblicher Amidierungskatalysatoren, wobei am Ende der Reaktion ein Unterdruck von kleiner 100 mbar angelegt wird.

Ein weiterer Gegenstand der Erfindung ist die Verwendung der erfindungsgemäßen Polyamidharze zur Herstellung von Reliefdrucken.

Als erfindungsgemäß mitverwendete Dicarbonsäuren gemäß A1) kommen die geradkettigen Dicarbonsäuren mit 6 - 13 Kohlenstoffatomen wie Adipinsäure, Korksäure, Azelainsäure, Brassylsäure und bevorzugt Sebazinsäure und Dekamethylendicarbonsäure in Betracht. Falls gewünscht können kürzerkettige Dicarbonsäuren wie Adipinsäure oder Pimelinsäure mitverwendet werden.

Als Dicarbonsäuren gemäß A2 werden 1,4 (1,3)-Cyclohexandicarbonsäure 1,4 (1,3)-Cyclohexandiessigsäure, Terephthalsäure, 1,4 (1,3) Phenylendiessigsäure und insbesondere Isophthalsäure eingesetzt.

Der Ausdruck dimerisierter Fettsäure bezieht sich auf die im Handel befindlichen polymerisierten Fettsäuren, welche Jodzahlen von ca. 100 bis 130 aufweisen und deren Gehalt an dimerer Fettsäure durch die allgemein üblichen Verfahren auf ca. 85 - 100 % erhöht wurde.

Die Jodzahl wird nach den in der Praxis üblichen Methoden bestimmt und angegeben in Jod pro 100 g Substanz.

Die polymerisierten Fettsäuren lassen sich nach den üblichen Verfahren (vgl. z. B. US-PS-2 482 761, US-PS-3 256 304) herstellen aus ungesättigten natürlichen und synthetischen einbasischen aliphatischen Säuren mit 12 - 22, bevorzugt 18 Kohlenstoffatomen.

Typische, im Handel erhältliche polymere Fettsäuren haben vor der Destillation etwa folgende Zusammensetzung:

| | |
|---|---|
| monomere Säuren | 5 - 15 Gew.-% |
| dimere Säuren | 60 - 80 Gew.-% |
| tri- und höherpolymere Säuren | 10 - 35 Gew.-% |

Nach der Destillation soll die Dimersäurefraktion nahezu frei von Monocarbonsäuren sein, und der Anteil der trimerisierten und höherplymerisierten Fettsäuren ≦ 1 Gew.-% betragen.

Sowohl die destillierten als auch die nicht-destillierten Fettsäuren können nach den bekannten Verfahren auf niedrigere Jodzahlen, vorzugsweise im Bereich von 10 - 40, hydriert werden. Erfindungsgemäß bevorzugt werden hydrierte dimerisierte Fettsäuren mit Jodzahlen 10 - 15 und einen Gehalt an dimerer Fettsäure von mindestens 90 Gew. %.

Die Zusammensetzung der Fettsäuren wird nach üblichen gaschromatischen Verfahren (GLC) ermittelt, wobei die Angabe des Dimergehaltes neben den dimerisierten Fettsäuren auch die geringen, im Dimerisierungsprozeß zwangsläufig gebildeten Anteile an ganz oder teilweise decarboxilierten Dimerisierungsprodukte umfaßt.

Das Verhältnis der Carbonsäure gemäß A1 : A2 liegt im Bereich von 1 : 0,1 bis 1 : 2 Mol, vorzugsweise 1 : 0,3 bis 1 : 0,8 Mol, und ist abhängig von der jeweiligen Komponente A1 und A2 und von in geringem Maße der Menge und Art der Komponente C, d. h. der Aminosäure bzw. des Laktams. Für die Herstellung besonders lichtechter Polyamide soll erfindungsgemäß bevorzugt keine oder nicht mehr als 0,05 Mol dimerisierte Fettsäure mitverwendet werden.

Zur Regulierung des Molekulargewichts können Monocarbonsäuren mit bis zu 18 C-Atomen mitverwendet werden, wobei die höheren gesättigten und geradkettigen Säuren mit 16 - 20 C-Atomen, wie insbesondere Palmitin- und Stearinsäuren, erfindungsgemäß bevorzugt werden. Diese Säuren werden vorzugsweise in Mengen von 0,05 bis 0,1 Mol, bezogen auf Carbonsäuren gemäß A1, mitverwendet.

Es ist ebenfalls möglich, das Molekulargewicht durch überschüssige Säure- bzw. Aminmengen zu regulieren. Da hierbei jedoch freie Carboxylgruppen bzw. Amingruppen im Molekül vorliegen, ist dieses Verfahren erfindungsgemäß weniger bevorzugt.

Als Aminkomponenten werden neben dem bevorzugten 1,6-Diaminohexan noch 2-Methyl-1,5-diaminopentan und ein Isomerengemisch des 2,4,4 (4,4,2)-Trimethyl-1,6-diaminohexans, 1,9-Diaminononan und 1,12-Diaminododecan verwendet.

Das Verhältnis der Säurekomponente A) zu den Aminkomponenten B) ist annähernd equivalent, vorzugsweise weisen die Polyamide Amin- und Säurezahlen von maximal 10 auf, wobei auch die Summe aus Amin- und Säurezahl nicht größer als 10 sein sollte.

Die erfindungsgemäß mitverwendbaren Aminosäuren gemäß C) sind solche der allgemeinen Formel

$H_2N-(CH_2)_n-COOH$

mit n = 5 - 11

bzw. deren Laktame, vorzugsweise mit n = 5.

Pro Mol Carboxylgruppen der unter A) genannten Dicarbonsäuren werden 0,5 bis 1,5 Mol, vorzugsweise 1,0 Mol, Aminosäure bzw. Laktam eingesetzt.

Falls erforderlich, können zur Regulierung des Molekulargewichts oder der Viskosität geringe Mengen an üblicher Monocarbonsäuren, vorzugsweise Stearinsäure, mitverwendet werden.

Die erfindungsgemäß verwendeten Polyamidharze lassen sich zu einem Pulver vermahlen, welches auch unter Auftragungsbedingungen, gegebenenfalls unter Mitverwendung von Antiblockmitteln, wie Stearate, Aerosil usw., rieselfähig bleibt. Die Korngröße des Pulvers kann je nach Bedarf variiert werden und liegt zwischen 40 - 500 Mikrometer, vorzugsweise zwischen 80 - 200 Mikrometer.

Der Schmelzpunkt der Harze ist den Erfordernissen der Praxis angepaßt. Er liegt so niedrig, daß durch die Aufschmelztemperaturen keine Beeinträchtigung von Substraten oder Untergrundlack entsteht, andererseits aber wiederum auch so hoch, daß auch bei Aufbringungstemperaturen keine Blockung eintritt.

Der bevorzugte Schmelzbereich (gemessen nach der Ring- und Kugel-Methode) liegt zwischen ca. 90 - 150 °C, vorzugsweise zwischen 100 - 140 °C.

Außerdem weisen die Harze einen engen Schmelzbereich auf, so daß eine schnelle Kleb- und Blockfreiheit in der sich an die Aufschmelzphase anschließenden Abkühlungsstufe erreicht wird. Dies ist für die Erzielung schneller Taktzeiten von erheblichem Interesse.

Die Schmelzviskositäten, welche einheitlich bei 220 °C mit einem Rotationsviskosimeter mit einer Platte/Kegel-Einrichtung der Firma Haake nach den Angaben des Geräteherstellers gemessen wurden, liegen im Bereich von ca. 10 bis 200 Pa•s, vorzugsweise 15 bis 80 Pa•s und insbesondere 20 - 50 Pa•s.

Mit den erfindungsgemäßen Polyamidharzen, welche mit den auf diesem Gebiet üblichen Untergrundfarben verträglich sind, ist im Reliefdruck eine Kombination von zusätzlichen und neuen Eigenschaften und Effekten erzielbar.

Im Gegensatz zu den bisher üblichen Harzen, welche eine glatte, glänzende, empfindliche Oberfläche liefern, verleihen die erfindungsgemäßen Harze dem Reliefdruck eine effektvolle, matte Oberfläche mit körniger Struktur oder feinnabriger Lederstruktur, welche eine außerordentliche Kratzfestigkeit aufweist.

Neben einer guten Haftung an den üblichen Substraten, wie Karton, Papier, Geweben aus natürlichen und/oder synthetischen Fasern wie Textilien und Textiltapeten, weisen die erfindungsgemäßen Harze zusätzlich eine ausgezeichnete Haftung an Metall und Glas auf.

Durch die körnige Struktur ergibt sich zusätzlich eine sehr gute Griffestigkeit bei bedruckten Behältern, wie insbesondere bei Flaschen und Tiegeln für Körperpflegemittel in der Kosmetikindustrie.

Durch die verschwindend geringe Eigenfärbung und hohe Transparenz der erfindungsgemäßen Polyamidharze treten Farbtonverschiebungen des darunterliegenden Farbdruckes nicht auf, und sie sind sowohl während der Applikation als auch unter UV-Belastung weitestgehend vergilbungsbeständig.

## Überprüfung der Polyamidharze

### Verfahren A

Die erfindungsgemäßen Polyamidharze gemäß Beispiel 1 - 22 wurden grob gebrochen, mit Trockeneis und/oder flüssigem Stickstoff gekühlt und in einer Pralltellermühle (Firma Alpine) kalt gemahlen. Aus dem erhaltenen Pulver wurde dann mit Hilfe eines Siebsatzes eine Kornfraktion von 40 - 500 Mikrometer ausgesiebt. Auf der gestrichenen (glatten) Seite eines weißen leichten Kartons wurde eine schwarz pigmentierte hochviskose Offsetfarbe mit einer von Hand zu bedienenden einfachen Buchdruckmaschine aufgetragen und nach einer Ablüftzeit von 10 - 20 Sekunden das ausgesiebte Pulver aufgetragen. Durch den klebrigen Charakter der Farbe blieb eine für die Bildung einer strukturierten Oberfläche ausreichende Menge Pulver haften, während das überschüssige Material ohne Schwierigkeiten wieder entfernt werden konnte. Der so vorbereitete Karton wurde dann in einem speziellen Pulverschmelzgerät (Konvexograph der Firma Grafra) von oben aus einer Entfernung von 20 - 30 cm mit IR-Strahlen erhitzt. Nach einer Verweilzeit von ca. 5 - 10 Sekunden wurden dabei sehr kratzfeste, körnige Oberflächenstrukturen erhalten. Da die Polyamidharze praktisch keine Eigenfärbung besitzen und nicht zum Vergilben neigen, konnte auch kein "Vergrauen" des Schwarztons der Druckfarbe beobachtet werden.

### Verfahren B

Eine weitere Variante des Auftragens einer Untergrundfarbe besteht darin, daß zunächst ein sogenannter reaktivierbarer Polyamidharzlack in Form der gewünschten Motive auf Endlosbahnen wie z. B. Aluminiumfolie im Tiefdruck aufgedruckt wird. Dieser speziell formulierte Lack ist im Gegensatz zur oben erwähnten Offset-Farbe sofort nach dem Drucken klebfrei, so daß die nach dem Druckvorgang aufgerollten

Aluminiumfolien ohne Schwierigkeiten wieder abgewickelt werden können. Die wieder abgewickelten Folien bzw. Folienabschnitte werden kurz vor dem Aufstreuen des Pulvers erhitzt, wodurch der aufgedruckte Lack klebrig wird und durch seine spezielle Formulierung diese Klebrigkeit auch noch 3 - 10 Sekunden nach dem Abkühlen beibehält, so daß auf diese Weise das aufgestreute Pulver in der gewünschten Menge auf dem Lack kleben bleibt. Der weitere Ablauf des Schmelzvorganges geschieht wie bereits vorher beschrieben.

Der Vorteil dieser sogenannten reaktivierbaren Farben liegt darin, daß auf diese Weise Rollenmaterial mit Untergrundfarbe auf Vorrat hergestellt werden kann, was mit der klebrigen, vorher genannten Offset-Farbe nicht möglich ist.

Die Struktur der Reliefoberflächen ist unabhängig von den oben aufgeführten Verfahren.

Verfahren C

Verklebt wurden Stoffstreifen aus Polyester/Wolle (55 %/45 %) von 5 cm Breite. Das Polyamidpulver wies ein Körnung von 300 - 400 µ auf. Die Auftragsmenge betrug 20 g/m$^2$ Stoff.

Die beschichteten Stoffstreifen wurden bei Temperaturen von ca. 20 - 30 °C oberhalb des Erweichungspunktes des Polyamidklebers mit einem zweiten unbeschichteten Stoffstreifen verklebt. Die Verklebungszeit betrug ca. 15 - 20 Sekunden, der Verklebungsdruck 400 g/cm$^2$.

Die verklebten Stoffe wurden vollständig in ein Perchlorethylenbad eingetaucht, nach 30 Minuten naß vermessen (Schälfestigkeit). Die Auswertung erfolgte in Anlehnung an DIN 53310.

Herstellung der Polyamidharze

Beispiel 1

In einem mit Rührer, Thermometer und absteigenden Kühler versehenen 2 Liter Dreihalskolben wurden unter Stickstoff 202,0 g Sebazinsäure ($A_1$) 1,0 Mol; 83,0 g Isophthalsäure ($A_2$) 0,5 Mol; 20,0 g Stearinsäure ($A_3$) 0,07 Mol; 339,0 g Caprolactam (C) 3,0 Mol; 182,3 g Hexamethylendiamin (B) 1,57 Mol; 0,21 g Phosphorsäure (85 %ige) (0,025 Gew. % bezogen auf Gesamteinwaage) als Katalysator miteinander vermischt. Zusätzlich wurden noch 100,0 g entsalztes Wasser zur besseren Homogenisierung zugegeben und in 2 Stunden auf 240 °C aufgeheizt. Diese Temperatur wurde 2 Stunden gehalten, wobei während der letzten 2 Stunden ein Vakuum von 5 mbar angelegt wurde. Danach wurde mit Stickstoff belüftet und das Polyamid abgelassen. Das erhaltene Polyamid zeigte einen Ring- und Kugel-Erweichungspunkt (DIN 52011) von 129 °C, eine Viskosität von 26,0 PA•s bei 220 °C (gemessen am Rotationsviskosimeter PK 401 W der Firma Haake (Karlsruhe) nach deren Vorschrift), eine Säurezahl von 3,9 und eine Aminzahl von 0,7.

Die in der folgenden Tabelle 1 aufgeführten Beispiele wurden analog hergestellt.

Dabei bedeuten:

| | |
|---|---|
| AZ | = Aminzahl in mg KOH/g Substanz |
| SZ | = Säurezahl in mg KOH/g Substanz |
| R+B | = Erweichungspunkt nach der Ring- und Kugelmethode DIN 52011 |
| Visk. | = Viskosität, gemessen bei 220 °C direkt aus der Schmelze mit Viskometer der Firma Haake, Karlsruhe/Berlin Platte-Kegel-Vorrichtung Typ PK 401 W nach Angaben des Herstellers |
| Sebazins. | = Sebazinsäure |
| Stearins. | = Stearinsäure |
| Isophthals. | = Isophthalsäure |
| Adipins. | = Adipinsäure |
| Dodecandis. | = Dodecandisäure |
| Pripol$^R$ | = Warenzeichen der Firma Unichema International |
| Pripol$^R$ 1009 | = hydrierte, polymerisierte Fettsäure mit Gehalten von:<br>0,1 % monomerer Fettsäure<br>99,0 % dimerer Fettsäure<br>1,0 % trimerer Fettsäure |
| Pripol$^R$ 1013 | = polymerisierte Fettsäuren mit Gehalten von:<br>0,1 % monomerer Fettsäure<br>95,0 % dimerer Fettsäure<br>5,0 % trimerer Fettsäure |

Tabelle 1

| | Säuren | | Diamine | | Zusätze | | AZ | SZ | R+B | Visk. |
|---|---|---|---|---|---|---|---|---|---|---|
| Bsp. | Molmengen | | | | | | | | °C | 220 °C Pa·s |
| 1 | Sebazins.<br>Stearins.<br>Isophthals. | 1,00<br>0,07<br>0,50 | Hexamethylen-diamin | 1,57 | Capro-lactam | 3,0 | 0,7 | 3,9 | 129 | 26,0 |
| 2 | Sebazins.<br>Stearins.<br>Pripol® 1009 | 1,00<br>0,07<br>0,50 | Hexamethylen diamin | 1,57 | Capro-lactam | 3,0 | 0,5 | 2,6 | 110 | 100,0 |
| 3 | Sebazins.<br>Stearins.<br>Pripol® 1013 | 1,00<br>0,07<br>0,50 | Hexamethylen-diamin | 1,57 | Capro-lactam | 3,0 | 0,5 | 1,0 | 103 | 95,0 |

| | Säuren | | Diamine | | Zusätze | | AZ | SZ | R+B | Visk. |
|---|---|---|---|---|---|---|---|---|---|---|
| Bsp. | Molmengen | | | | | | | | °C | 220 °C Pa·s |
| 4 | Sebazins. | 0,90 | Hexamethylen-diamin | 1,55 | Capro-lactam | 3,0 | 3,3 | 5,3 | 125 | 15,0 |
| | Stearins. | 0,05 | | | | | | | | |
| | Pripol® 1009 | 0,10 | | | | | | | | |
| | Isophthals. | 0,50 | | | | | | | | |
| 5 | Sebazins. | 1,00 | Hexamethylen-diamin | 1,56 | Capro-lactam | 3,0 | 3,0 | 6,0 | 126 | 24,0 |
| | Stearins. | 0,06 | | | | | | | | |
| | Dimethyl-terephthalat | 0,50 | | | | | | | | |
| 6 | Sebazins. | 0,75 | Hexamethylen-diamin | 1,58 | Capro-lactam | 3,0 | 0,8 | 2,3 | 126 | 29,0 |
| | Stearins. | 0,08 | | | | | | | | |
| | Adipins. | 0,75 | | | Aminounde-cansäure | 1,5 | | | | |

| | Säuren | | Diamine | | Zusätze | | AZ | SZ | R+B | Visk. |
|---|---|---|---|---|---|---|---|---|---|---|
| Bsp. | Molmengen | | | | | | | | °C | 220 °C Pa·s |
| 7 | Sebazins.<br>Stearins.<br>Isophthals. | 1,00<br>0,06<br>0,50 | Hexamethylen-diamin | 1,56 | Capro-lactam | 4,50 | 1,0 | 4,9 | 143 | 48,0 |
| 8 | Sebazins.<br>Stearins.<br>Isophthals. | 1,00<br>0,07<br>1,00 | Hexamethylen-diamin | 2,07 | Capro-lactam | 4,0 | 0,9 | 2,4 | 150 | 56,0 |
| 9 | Sebazins.<br>Stearins.<br>Isophthals. | 1,00<br>0,10<br>2,00 | Hexamethylen-diamin | 3,10 | Capro-lactam | 6,0 | 0,6 | 1,5 | 150 | 48,1 |
| 10 | Sebazins.<br>Stearins.<br>Isophthals. | 1,00<br>0,05<br>0,50 | Hexamethylen-diamin | 1,55 | Capro-lactam | 1,5 | 2,5 | 6,5 | 126 | 18,0 |

| | Säuren | | Diamine | | Zusätze | | AZ | SZ | R+B °C | Visk. 220 °C Pa·s |
|---|---|---|---|---|---|---|---|---|---|---|
| Bsp. | Molmengen | | | | | | | | | |
| 11 | Sebazins.<br>Stearins.<br>Isophthals. | 1,00<br>0,10<br>2,00 | Hexamethylen-diamin | 3,10 | Capro-lactam | 3,0 | 1,8 | 8,0 | 143 | 22,0 |
| 12 | Adipins.<br>Stearins.<br>Isophthals. | 1,00<br>0,06<br>1,00 | Hexamethylen-diamin | 2,06 | Capro-lactam | 2,0 | 2,1 | 8,0 | 133 | 26,0 |
| 13 | Adipins.<br>Stearins.<br>Isophthals. | 1,00<br>0,06<br>1,00 | Hexamethylen-diamin | 2,06 | Capro-lactam | 4,0 | 1,4 | 5,8 | 143 | 31,0 |

| | Säuren | | Diamine | | Zusätze | | AZ | SZ | R+B | Visk. |
|---|---|---|---|---|---|---|---|---|---|---|
| Bsp. | Molmengen | | | | | | | | °C | 220 °C Pa·s |
| 14 | Sebazins. | 1,00 | Trimethyl-hexamethylen-diamin | 1,55 | Capro-lactam | 3,0 | 5,1 | 2,0 | 138 | 28,0 |
| | Stearins. | 0,05 | | | | | | | | |
| | Isophthals. | 0,50 | | | | | | | | |
| 15 | Sebazins. | 1,00 | Hexamethylen-diamin | 1,55 | Capro-lactam | 3,0 | 0,6 | 4,7 | 98 | 93,0 |
| | Stearins. | 0,05 | | | | | | | | |
| | Dodecandis. | 0,50 | | | | | | | | |
| 16 | Stearins. | 0,05 | Methylpenta-methylen-diamin | 1,55 | Capro-lactam | 3,0 | 3,2 | 3,7 | 94 | 100,0 |
| | Dimethyl-terephthalat | 0,50 | | | | | | | | |
| | Dodecandis. | 1,00 | | | | | | | | |

| | Säuren | | Diamine | | Zusätze | | AZ | SZ | R+B °C | Visk. 220 °C Pa·s |
|---|---|---|---|---|---|---|---|---|---|---|
| Bsp. | Molmengen | | | | | | | | | |
| 17 | Stearins.<br>Dodecandis.<br>Azelains. | 0,05<br>0,50<br>1,00 | Hexamethylen-diamin | 1,55 | Capro-lactam | 3,0 | 0,8 | 3,7 | 124 | 100,0 |
| 18 | Sebazins.<br>Stearins.<br>Dodecandis.<br>Azelains. | 0,50<br>0,05<br>0,50<br>0,50 | Hexamethylen-diamin | 1,55 | Capro-lactam | 3,0 | 1,6 | 4,4 | 92 | 89,0 |
| 19 | Sebazins.<br>Stearins.<br>Isophthals.<br>1,4-Cyclohexan-dicarbons. | 1,00<br>0,08<br>0,25<br>0,25 | Hexamethylen-diamin | 1,58 | Capro-lactam | 3,0 | 0,7 | 1,4 | 140 | 54,0 |

| | Säuren | | Diamine | | Zusätze | | AZ | SZ | R+B | Visk. |
|---|---|---|---|---|---|---|---|---|---|---|
| Bsp. | Molmengen | | | | | | | | °C | 220 °C Pa·s |
| 20 | Sebazins.<br>Stearins.<br>Isophthals.<br>Pripol$^R$ 1013 | 1,00<br>0,05<br>0,45<br>0,05 | Hexamethylen-diamin | 1,55 | Capro-lactam | 3,0 | 0,6 | 2,8 | 91 | 80,0 |
| 21 | Sebazins.<br>Stearins.<br>Isophthals. | 1,00<br>0,07<br>0,50 | Hexamethylen-diamin | 1,57 | Capro-lactam | 3,0 | 0,7 | 3,9 | 109 | 25,7 |
| 22 | Sebazins.<br>Isophthals.<br>Pripol$^R$ 1013 | 1,00<br>0,45<br>0,05 | Hexamethylen-diamin | 1,50 | Capro-lactam | 3,0 | 0,4 | 1,5 | 112 | 85,0 |

Tabelle 2

| Nummer | Bsp. aus Tab. 1 | Verfahren | Kornfraktion in μ | Oberfläche der Thermographiedrucke | |
|---|---|---|---|---|---|
| | | | | Aussehen | Beschaffenheit |
| 1 | 1 | A | 80 - 200 | sehr gleichmäßige, matt-schwarze Perlstruktur | Hohe Kratzfestigkeit, sehr gute Griffigkeit, sehr gute Haftung |
| 2 | 1 | B | " | " | " |
| 3 | 2 | A | " | " | " |
| 4 | 3 | " | " | " | " |
| 5 | 4 | " | " | " | " |
| 6 | 5 | " | " | " | " |
| 7 | 6 | " | " | " | " |
| 8 | 7 | " | " | " | " |
| 9 | 8 | " | " | " | " |
| 10 | 9 | " | " | " | " |
| 11 | 10 | " | " | " | " |
| 12 | 11 | " | " | " | " |
| 13 | 12 | " | " | " | " |
| 14 | 13 | " | " | " | " |
| 15 | 14 | " | " | " | " |
| 16 | 15 | " | " | " | " |
| 17 | 16 | " | " | " | " |
| 18 | 17 | " | " | " | " |
| 19 | 18 | " | " | " | " |
| 20 | 19 | " | " | " | " |

| Nummer | Bsp. aus Tab. 1 | Verfahren | Kornfraktion in µ | Oberfläche der Thermographiedrucke | |
|---|---|---|---|---|---|
| | | | | Aussehen | Beschaffenheit |
| 21 | 1 | A | <63 | Extrem feine Perlstruktur; Ausbildung d. Struktureffekts ausreichend | Kratzfestigkeit gut; Griffigkeit geringer |
| 22 | 1 | " | 300 - 400 | sehr grobe Struktur; einzelne größer-flächige geschmolzene Harzfilme; ungleichmäßige Struktur | " |
| | | | | Verklebungstemperatur °C | Perchlorethylenbeständigkeit N/5 cm |
| 23 | 20 | C | 300 - 400 | 140 | 36 |
| 24 | 21 | C | 300 - 400 | 140 | 38 |
| 25 | 22 | C | 300 - 400 | 140 | 45 |

## Patentansprüche

1. Polyamide, herstellbar durch Kondensation von

A1) mindestens einer aliphatischen Dicarbonsäure der allgemeinen Formel

$HOOC-(CH_2)_n-COOH$

mit n = 4 - 11 und

A2) mindestens einer der Säuren der allgemeinen Formel

HOOC-R-COOH

worin der Rest R

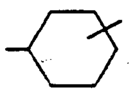 , 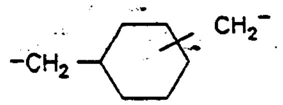 , 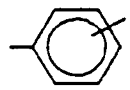 , 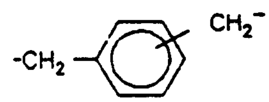

sein kann, und worin das Verhältnis von A1 : A2 im Bereich von 1 : 0,1 bis 1 : 2 Mol liegt und gegebenenfalls
A3) einer gesättigten Monocarbonsäure in Mengen bis zu 0,1 Mol, bezogen auf Carbonsäuremenge gemäß A1 und
B) mindestens eines der Diamine aus der Gruppe 1,6 - Diaminohexan, 1,5 - Diamino-2-methylpentan, 2,4,4 (4,4,2)-Trimethyl-1,6-diaminohexan, 1,9-Diaminononan und 1,12-Diaminododekan, worin das Verhältnis der Komponenten A1) + A2) zu B im wesentlichen - bezogen auf Amino- und Säuregruppen - equivalent ist und
C) mindestens einer Aminocarbonsäure der allgemeinen Formel

$H_2N-(CH_2)_n-COOH$

mit n = 5 - 11

oder deren Laktame

wobei pro Mol Carboxylgruppen der unter A genannten Säuren, 0,5 - 1,5 Mol Amonocarbonsäure bzw. Laktam eingesetzt werden, nach an sich bekannten Verfahren bei Temperaturen zwischen 200 - 280 °C, gegebenenfalls unter Mitverwendung üblicher Amidierungskatalysatoren, wobei am Ende der Reaktion ein Unterdruck von kleiner 100 mbar angelegt wird.

**2.** Polyamide gemäß Anspruch 1, dadurch gekennzeichnet, daß als Aminocarbonsäuren gemäß C) epsilon-Aminocapronsäure und/oder Coprolaktam verwendet wird.

**3.** Polyamide gemäß Anspruch 1, dadurch gekennzeichnet, daß bis < 0,05 Mol der Codicarbonsäure gemäß A2) durch dimerisierte Fettsäure ersetzt wird.

**4.** Polyamide gemäß Anspruch 1, dadurch gekennzeichnet, daß als Komponente A1) 1,0 Mol Sebazinsäure und A2) 0,3 bis 0,8 Mol Isophthalsäure verwendet werden, wobei gegebenenfalls bis zu < 0,05 Mol der Isophtalsäure durch dimerisierte Fettsäure ersetzt werden kann, und B) 1,3 - 1,6 Mol 1,6-Diaminohexan und C) 2,6 - 3,6 Mol Caprolaktam eingesetzt werden.

**5.** Verfahren zur Herstellung von Polyamiden durch Polykondensation von
A1) mindestens einer aliphatischen Dicarbonsäure der allgemeinen Formel

$HOOC-(CH_2)_n-COOH$

mit n = 4 - 11 und gegebenenfalls
A2) mindestens eine der Säuren der allgemeinen Formel

HOOC-R-COOH

worin der Rest R

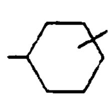 , 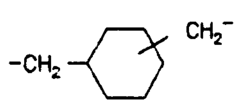 , 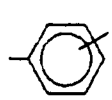 , 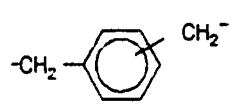 -DFS- ,

sein kann, und worin -DFS- der Rest der dimerisierten Fettsäuren bedeutet, und worin das Verhältnis

von A1 : A2 im Bereich von 1 : 0,05 bis 1 : 2,0 Mol vorzugsweise 1 : 0,5 Mol sein kann, und gegebenenfalls
A3) einer gesättigten Monocarbonsäure in Mengen von bis zu 0,1 Mol, bezogen auf Carbonsäuremenge gemäß A1 und
B) mindestens eines der Diamine aus der Gruppe 1,6 - Diaminohexan, 1,5 - Diamino-2-methylpentan, 2,4,4 (4,4,2)-Trimethyl-1,6-diaminohexan, 1,9-Diaminononan, 1,12-Diaminododekan, worin das Verhältnis der Komponenten A1) + A2) zu B im wesentlichen - bezogen auf Amino- und Säuregruppen - equivalent ist und
C) mindestens Aminocarbonsäure der allgemeinen Formel

$H_2N-(CH_2)_n-COOH$

mit n = 5 - 11

oder deren Laktame

wobei pro Mol Carboxylgruppen der unter A genannten Säuren 0,5 - 1,5 Mol Amonocarbonsäure bzw. Laktam eingesetzt werden, nach an sich bekannten Verfahren bei Temperaturen zwischen 200 - 280 °C, gegebenenfalls unter Mitverwendung üblicher Amidierungskatalysatoren, wobei am Ende der Reaktion ein Unterdruck von kleiner 100 mbar angelegt wird.

**6.** Verfahren gemäß Anspruch 5, dadurch gekennzeichnet, daß als Komponente A1) 1,0 Mol Sebazinsäure und Komponente A2) 0,5 Mol Isophthalsäure verwendet werden, wobei gegebenenfalls bis zu 0,05 Mol der Isophthalsäure durch dimerisierte Fettsäure ersetzt werden kann, und B) 1,5 Mol 1,6-Diaminohexan und C) 3 Mol Caprolaktam eingesetzt werden.

**7.** Verfahren gemäß Anspruch 5, dadurch gekennzeichnet, daß die Komponenten A) bis C) und deren Verhältnisse so gewählt werden, daß die Polyamide Schmelzpunkte zwischen 90 - 150 °C aufweisen.

**8.** Verfahren gemäß Ansprüche 5 bis 7, dadurch gekennzeichnet, daß die Komponenten A) bis C) und deren Verhältnisse so gewählt werden, daß die Viskositäten, gemessen bei 220 °C, zwischen 10 - 150 Pa•s liegen.

**9.** Verwendung der Polyamide gemäß Ansprüche 1 - 4 für die Verklebung von Karton, Papier, Geweben aus natürlichen und/oder synthetischen Fasern wie Textilien, Textiltapeten, Metallen und Glas.

**10.** Verwendung der Polyamide gemäß Ansprüche 1 - 8 für die Herstellung von Reliefdrucken.

**Patentansprüche für folgenden Verstragsstaat : ES**

**1.** Verfahren zur Herstellung von Polyamiden durch Polykondensation von
A1) mindestens einer aliphatischen Dicarbonsäure der allgemeinen Formel

$HOOC-(CH_2)_n-COOH$

mit n = 4 - 11 und gegebenenfalls
A2) mindestens eine der Säuren der allgemeinen Formel

HOOC-R-COOH

worin der Rest R

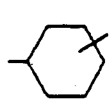 , 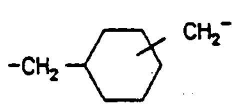 , 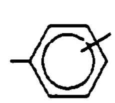 , 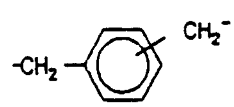 , -DFS-

sein kann, und worin -DFS- der Rest der dimerisierten Fettsäuren bedeutet, und worin das Verhältnis von A1 : A2 im Bereich von 1 : 0,05 bis 1 : 2,0 Mol vorzugsweise 1 : 0,5 Mol sein kann, und gegebenenfalls

A3) einer gesättigten Monocarbonsäure in Mengen von bis zu 0,1 Mol, bezogen auf Carbonsäuremenge gemäß A1 und

B) mindestens eines der Diamine aus der Gruppe 1,6 - Diaminohexan, 1,5 - Diamino-2-methylpentan, 2,4,4 (4,4,2)-Trimethyl-1,6-diaminohexan, 1,9-Diaminononan, 1,12-Diaminododekan, worin das Verhältnis der Komponenten A1) + A2) zu B im wesentlichen - bezogen auf Amino- und Säuregruppen - equivalent ist und

C) mindestens Aminocarbonsäure der allgemeinen Formel

$H_2N-(CH_2)_n-COOH$

mit n = 5 - 11

oder deren Laktame

wobei pro Mol Carboxylgruppen der unter A genannten Säuren 0,5 - 1,5 Mol Amonocarbonsäure bzw. Laktam eingesetzt werden, nach an sich bekannten Verfahren bei Temperaturen zwischen 200 - 280 °C, gegebenenfalls unter Mitverwendung üblicher Amidierungskatalysatoren, wobei am Ende der Reaktion ein Unterdruck von kleiner 100 mbar angelegt wird.

**2.** Verfahren gemäß Anspruch 1, dadurch gekennzeichnet, daß als Aminocarbonsäuren gemäß C) epsilon-Aminocapronsäure und/oder Coprolaktam verwendet wird.

**3.** Verfahren gemäß Anspruch 1, dadurch gekennzeichnet, daß bis < 0,05 Mol der Codicarbonsäure gemäß A2) durch dimerisierte Fettsäure ersetzt wird.

**4.** Verfahren gemäß Anspruch 1, dadurch gekennzeichnet, daß als Komponente A1) 1,0 Mol Sebazinsäure und A2) 0,3 bis 0,8 Mol Isophthalsäure verwendet werden, wobei gegebenenfalls bis zu < 0,05 Mol der Isophtalsäure durch dimerisierte Fettsäure ersetzt werden kann, und B) 1,3 - 1,6 Mol 1,6-Diaminohexan und C) 2,6 - 3,6 Mol Caprolaktam eingesetzt werden.

**5.** Verfahren gemäß Anspruch 5, dadurch gekennzeichnet, daß als Komponente A1) 1,0 Mol Sebazinsäure und Komponente A2) 0,5 Mol Isophthalsäure verwendet werden, wobei gegebenenfalls bis zu 0,05 Mol der Isophthalsäure durch dimerisierte Fettsäure ersetzt werden kann, und B) 1,5 Mol 1,6-Diaminohexan und C) 3 Mol Caprolaktam eingesetzt werden.

**6.** Verfahren gemäß Anspruch 5, dadurch gekennzeichnet, daß die Komponenten A) bis C) und deren Verhältnisse so gewählt werden, daß die Polyamide Schmelzpunkte zwischen 90 - 150 °C aufweisen.

**7.** Verfahren gemäß Ansprüche 5 bis 7, dadurch gekennzeichnet, daß die Komponenten A) bis C) und deren Verhältnisse so gewählt werden, daß die Viskositäten, gemessen bei 220 °C, zwischen 10 - 150 Pa•s liegen.

**8.** Verwendung der Polyamide gemäß Ansprüche 1 - 4 für die Verklebung von Karton, Papier, Geweben aus natürlichen und/oder synthetischen Fasern wie Textilien, Textiltapeten, Metallen und Glas.

**9.** Verwendung der Polyamide gemäß Ansprüche 1 - 8 für die Herstellung von Reliefdrucken.